# EUROPÄISCHE PATENTSCHRIFT

(11) **EP 4 390 069 B1**
(45) Veröffentlichungstag und Bekanntmachung des Hinweises auf die Patenterteilung: **09.04.2025**
(21) Anmeldenummer: 23211392.8
(22) Anmeldetag: 22.11.2023
(51) Int. Cl.: F01N 3/025, F01N 3/10, F01N 3/20, F01N 3/28, F01N 13/00

(54) **ABGASBEHANDLUNGSANORDNUNG**
EXHAUST GAS TREATMENT ASSEMBLY
AGENCEMENT DE TRAITEMENT DE GAZ D'ÉCHAPPEMENT

(30) Priorität: 05.12.2022 DE 102022132122
(43) Veröffentlichungstag der Anmeldung: 26.06.2024
(73) Patentinhaber: Purem GmbH, 66539 Neunkirchen (DE)
(72) Erfinder: Bräuning, Silas, Denkendorf (DE); Datz, Wolfgang, Tübingen (DE); Henzler, Markus, Grafenberg (DE); Velyaev, Oleksandr, Stuttgart (DE); Wolf, Tobias, Köngen (DE); Wieland, Arthur, Baltmannsweiler (DE)
(74) Vertreter: Ruttensperger Lachnit Trossin Gomoll

(56) Entgegenhaltungen:
- DE-A1- 102005 006 426
- US-A- 6 050 088
- US-A1- 2009 004 082
- US-B2- 11 268 420
- US-B2- 8 607 551
- US-B2- 8 763 369

## Beschreibung

Die vorliegende Erfindung betrifft eine Abgasbehandlungsanordnung für eine Abgasanlage einer Brennkraftmaschine, insbesondere einer Diesel-Brennkraftmaschine.

Zum Erreichen der zulässigen Abgaswerte der von Brennkraftmaschinen, insbesondere Diesel-Brennkraftmaschinen, ausgestoßenen Abgase ist es beispielsweise bekannt, ein Reaktionsmittel, wie zum Beispiel eine Harnstoff/Wasser-Lösung, in das Abgas einzuspritzen, um in einer insbesondere als SCR-Katalysatoreinheit ausgebildeten Abgasbehandlungseinheit den Stickoxidanteil zu senken. Auch ist es bekannt, verschiedene Arten von Katalysatoren, wie zum Beispiel SCR-Katalysatoreinheiten und Oxidationskatalysatoreinheiten, in einer derartigen Abgasbehandlungsanordnung zu kombinieren, um eine möglichst effiziente Minderung des Schadstoffanteils in dem zur Umgebung ausgestoßenen Abgas zu erreichen.

Für die in verschiedenen Systembereichen einer derartigen Abgasbehandlungsanordnung durchzuführenden katalytischen Reaktionen ist es erforderlich, dass die hierfür wirksamen Katalysatormaterialien eine ausreichend hohe Temperatur aufweisen. Da insbesondere in Startphasen des Arbeitsbetriebs einer Brennkraftmaschine oder bei vergleichsweise niedrigen Umgebungstemperaturen die im Abgas transportierte Wärme oftmals nicht ausreichend ist, um eine für die durchzuführenden katalytischen Reaktionen ausreichend hohe Temperatur schnell zu erreichen bzw. zuverlässig aufrecht zu erhalten, ist es beispielsweise bekannt, elektrisch betriebene Abgasheizer in eine Abgasanlage zu integrieren, um auf das von einer Brennkraftmaschine ausgestoßene Abgas oder ein anderes in die Abgasanlage eingeleitetes Gas stromaufwärts eines oder mehrerer katalytisch wirksamer Systembereiche Wärme zu übertragen, die dann durch das Abgas bzw. Gas zu dem bzw. den katalytisch wirksamen Systembereichen transportiert und auf diese übertragen wird.

Eine Abgasbehandlungsanordnung gemäß dem Oberbegriff des Anspruchs 1 ist aus der US 11 268 420 B2 bekannt. Bei dieser Abgasbehandlungsanordnung sind in einer linearen Anordnung aufeinander folgend eine Abgasbehandlungseinheit mit einer SCR-Katalysatoreinheit und einer Ammoniaksperrkatalysatoreinheit sowie eine Abgasbehandlungsbaugruppe mit einer Oxidationskatalysatoreinheit und einem Partikelfilter angeordnet. Zwischen der Abgasbehandlungseinheit und der stromabwärts auf diese folgenden Abgasbehandlungsbaugruppe wird ein Kraftstoff in den Abgasstrom eingespritzt.

Die US 2009/0004082 A1 offenbart eine Abgasbehandlungsanordnung, bei welcher in das von einer Diesel-Brennkraftmaschine ausgestoßene Abgas über mehrere in ringartiger Konfiguration und koaxial zueinander angeordnete Injektionsrohre eine Kohlenwasserstoffverbindung und eine Stickstoffverbindung bzw. ein Gemisch davon eingespritzt wird. Die Injektionsrohre weisen eine Mehrzahl von in Richtung stromaufwärts orientierten Injektionsöffnungen auf, über welche die Kohlenwasserstoffverbindung und die Stickstoffverbindung bzw. das Gemisch davon in Richtung stromaufwärts in den Abgasstrom eingespritzt werden.

Es ist die Aufgabe der vorliegenden Erfindung, eine Abgasbehandlungsanordnung für eine Abgasanlage einer Brennkraftmaschine, insbesondere Diesel-Brennkraftmaschine, vorzusehen, mit welcher bei baulich einfacher und kompakter Ausgestaltung eine zuverlässige Erwärmung von zur Abgasbehandlung vorgesehenen Systembereichen gewährleistet werden kann.

Erfindungsgemäß wird diese Aufgabe gelöst durch eine Abgasbehandlungsanordnung für eine Abgasanlage einer Brennkraftmaschine, insbesondere Diesel-Brennkraftmaschine, umfassend wenigstens eine erste Abgasbehandlungseinheit und stromabwärts der wenigstens einen ersten Abgasbehandlungseinheit, eine Abgasbehandlungsbaugruppe, wobei die wenigstens eine erste Abgasbehandlungseinheit und die Abgasbehandlungsbaugruppe in Richtung einer Strömungspfad-Längsachse eines die wenigstens eine erste Abgasbehandlungseinheit und die Abgasbehandlungsbaugruppe umfassenden Strömungspfads axial aufeinander folgend angeordnet sind, wobei in dem Strömungspfad im Wesentlichen axial zwischen der wenigstens einen ersten Abgasbehandlungseinheit und der Abgasbehandlungsbaugruppe eine Kohlenwasserstoff-Einleitbaugruppe zum Einleiten von Kohlenwasserstoff in in dem Strömungspfad strömendes Abgas angeordnet ist, wobei die Kohlenwasserstoff-Einleitbaugruppe einen die Strömungspfad-Längsachse ringartig umgebenden Einleit-Ringströmungskanal umfasst, wobei der Einleit-Ringströmungskanal in einem stromaufwärtigen Strömungskanal-Endbereich zu einem Austrittsbereich der wenigstens einen ersten Abgasbehandlungseinheit offen ist und in einem stromabwärtigen Strömungskanal-Endbereich zu einem Eintrittsbereich der Abgasbehandlungsbaugruppe offen ist, wobei die Kohlenwasserstoff-Einleitbaugruppe eine Kohlenwasserstoff-Abgabeeinheit zum Abgeben von Kohlenwasserstoff in den Einleit-Ringströmungskanal umfasst.

Durch das Bereitstellen der erfindungsgemäß aufgebauten Kohlenwasserstoff-Einleitbaugruppe wird die Möglichkeit geschaffen, bei seiner Oxidation Wärme freisetzenden und somit zur Erwärmung von zur Abgasbehandlung vorgesehenen Systembereichen beitragenden Kohlenwasserstoff, also beispielsweise den auch einer Brennkraftmaschine zuzuführenden Kraftstoff, in den Abgasstrom einzuleiten und effizient mit Abgas zu durchmischen.

Für eine effiziente Durchmischung von Abgas und Kohlenwasserstoff kann bei kompakter Ausgestaltung ein vergleichsweise langer zur Durchmischung beitragender Strömungsweg dadurch erreicht werden, dass der Einleit-Ringströmungskanal in seinem stromaufwärtigen Strömungskanal-Endbereich eine Strömungskanal-Eintrittsöffnung und in seinem stromabwärtigen Strömungskanal-Endbereich eine Strömungskanal-Austrittsöffnung umfasst, und dass die Strömungskanal-Austrittsöffnung der Strömungskanal-Eintrittsöffnung bezüglich der Strömungspfad-Längsachse im Wesentlichen diametral gegenüberliegt. Weiter kann hierfür vorgesehen sein, dass die Strömungskanal-Austrittsöffnung und die Strömungskanal-Eintrittsöffnung in Richtung der Strömungspfad-Längsachse im Wesentlichen nicht zueinander versetzt sind, so dass diese im Wesentlichen im gleichen axialen Bereich des Strömungspfads positioniert sind.

Ein langer Strömungsweg, in welchem die Durchmischung von Kohlenwasserstoff und Abgas unterstützt wird, kann auch dadurch erreicht werden, dass wenigstens in einem Bereich axial zwischen der wenigstens einen ersten Abgasbehandlungseinheit und der Abgasbehandlungsbaugruppe der Strömungspfad von einer im Wesentlichen in Richtung der Strömungspfad-Längsachse sich erstreckenden Umfangswand umgrenzt ist, und dass der Einleit-Ringströmungskanal zwischen dem stromaufwärtigen Strömungskanal-Endbereich und dem stromabwärtigen Strömungskanal-Endbereich an einer Außenseite der Umfangswand verläuft.

Zum Leiten von aus der wenigstens einen ersten Abgasbehandlungseinheit austretendem Abgas in den Einleit-Ringströmungskanal kann in dem von der Umfangswand umgrenzten Strömungspfad axial zwischen der wenigstens einen ersten Abgasbehandlungseinheit und der Abgasbehandlungsbaugruppe eine den Strömungspfad in einen an den Austrittsbereich der wenigstens einen ersten Abgasbehandlungseinheit anschließenden stromaufwärtigen Strömungspfadabschnitt und einen an den Eintrittsbereich der Abgasbehandlungsbaugruppe anschließenden stromabwärtigen Strömungspfadabschnitt trennende Trennwand angeordnet sein. Dabei kann Der stromaufwärtige Strömungskanal-Endbereich zu dem stromaufwärtigen Strömungspfadabschnitt offen sein, und der stromabwärtige Strömungskanal-Endbereich kann zu dem stromabwärtigen Strömungspfadabschnitt offen sein.

Um das aus der wenigstens einen ersten Abgasbehandlungseinheit abgegebene Abgas zuverlässig in den Einleit-Ringströmungskanal leiten zu können, wird weiter vorgeschlagen, dass die Strömungskanal-Eintrittsöffnung in der Umfangswand stromaufwärts der Trennwand angeordnet ist und die Strömungskanal-Austrittsöffnung in der Umfangswand stromabwärts der Trennwand angeordnet ist.

Eine effiziente Durchmischung von Kohlenwasserstoff und Abgas in dem Einleit-Ringströmungskanal kann weiter dadurch unterstützt werden, dass die Kohlenwasserstoff-Abgabeeinheit Kohlenwasserstoff an einem Kohlenwasserstoff-Abgabeort in den Einleit-Ringströmungskanal abgibt, und dass der Kohlenwasserstoff-Abgabeort näher an dem stromaufwärtigen Strömungskanal-Endbereich als an dem stromabwärtigen Strömungskanal-Endbereich angeordnet ist.

Dabei kann die Kohlenwasserstoff-Abgabeeinheit zum Abgeben von Kohlenwasserstoff mit einer zum Einleit-Ringströmungskanal im Wesentlichen tangential orientierten Haupt-Abgaberichtung angeordnet sein, oder/und kann die Kohlenwasserstoff-Abgabeeinheit zum Abgeben von Kohlenwasserstoff mit einer im Wesentlichen einer Abgas-Hauptströmungsrichtung im Einleit-Ringströmungskanal insbesondere am Abgabeort entsprechenden Haupt-Abgaberichtung angeordnet sein. Dadurch wird ohne das Einführen einer wesentlichen Erhöhung eines Strömungswiderstandes die effiziente Durchmischung von Kohlenwasserstoff und Abgas im Einleit-Ringströmungskanal unterstützt.

Zur weiteren Minderung des in dem von einer Brennkraftmaschine ausgestoßenen Abgas enthaltenen Schadstoffanteils kann stromabwärts der Abgasbehandlungsbaugruppe wenigstens eine zweite Abgasbehandlungseinheit angeordnet sein.

Um in der wenigstens einen zweiten Abgasbehandlungseinheit eine katalytische Reinigungsreaktion effizient durchführen zu können, kann stromabwärts der Abgasbehandlungsbaugruppe und stromaufwärts der wenigstens einen zweiten Abgasbehandlungseinheit eine Abgas/Reaktionsmittel-Mischstrecke mit einem im Wesentlichen in Richtung einer Mischstrecken-Längsachse langgestreckten Mischkanal und einer Reaktionsmittel-Abgabeeinheit zum Abgeben von Reaktionsmittel in den Mischkanal vorgesehen sein.

Für eine kompakte Ausgestaltung der Abgasbehandlungsanordnung wird vorgeschlagen, dass die Mischstrecken-Längsachse im Wesentlichen parallel zur Strömungspfad-Längsachse ist, oder/und dass der Strömungspfad und die Abgas/Reaktionsmittel-Mischstrecke einander in axialer Richtung im Wesentlichen vollständig überlappen, so dass ein Eintrittsbereich der Abgas/Reaktionsmittel-Mischstrecke in Richtung der Mischstrecken-Längsachse im Wesentlichen im gleichen axialen Bereich positioniert ist, wie ein Austrittsbereich der Abgasbehandlungsbaugruppe, und ein Austrittsbereich der Abgas/Reaktionsmittel-Mischstrecke in Richtung der Mischstrecken-Längsachse im Wesentlichen im gleichen axialen Bereich positioniert ist, wie ein Eintrittsbereich der wenigstens einen ersten Abgasbehandlungseinheit.

Eine effiziente Ausnutzung des für die Abgasbehandlungsanordnung bereitgestellten Bauvolumens kann erreicht werden, wenn eine Abgas-Hauptströmungsrichtung im Mischkanal im Wesentlichen entgegengesetzt gerichtet ist zu einer Abgas-Hauptströmungsrichtung im Strömungspfad.

Weiter kann hierfür die wenigstens eine zweite Abgasbehandlungseinheit in Richtung einer zur Strömungspfad-Längsachse im Wesentlichen parallelen Abgasbehandlungseinheit-Längsachse langgestreckt sein und im Wesentlichen in Richtung der Abgasbehandlungseinheit-Längsachse durchströmbar sein, und die wenigstens eine zweite Abgasbehandlungseinheit und die Abgas/Reaktionsmittel-Mischstrecke können einander in axialer Richtung im Wesentlichen vollständig überlappen, so dass der Eintrittsbereich der Abgas/Reaktionsmittel-Mischstrecke in Richtung der Mischstrecken-Längsachse im Wesentlichen im gleichen axialen Bereich positioniert ist, wie ein Austrittsbereich der wenigstens einen zweiten Abgasbehandlungseinheit, und der Austrittsbereich der Abgas/Reaktionsmittel-Mischstrecke in Richtung der Mischstrecken-Längsachse im Wesentlichen im gleichen axialen Bereich positioniert ist, wie ein Eintrittsbereich der wenigstens einen zweiten Abgasbehandlungseinheit.

Zum Bereitstellen einer Strömungsverbindung kann der Eintrittsbereich der Abgas/Reaktionsmittel-Mischstrecke über ein erstes Strömungsumlenkgehäuse mit dem Austrittsbereich der Abgasbehandlungsbaugruppe verbunden sein, und der Austrittsbereich der Abgas/Reaktionsmittel-Mischstrecke kann über ein zweites Strömungsumlenkgehäuse mit dem Eintrittsbereich der wenigstens einen zweiten Abgasbehandlungseinheit verbunden sein.

Für eine Erhöhung der Abgasbehandlungseffizienz bei kompakter Bauart können wenigstens zwei zueinander parallel durchströmbare zweite Abgasbehandlungseinheiten quer zur Abgasbehandlungseinheit-Längsachse nebeneinander und einander in Richtung der Abgasbehandlungseinheit-Längsachse im Wesentlichen vollständig überlappend vorgesehen sein.

Wenigstens eine Abgasbehandlungseinheit kann wenigstens eine SCR-Katalysatoreinheit oder/und wenigstens eine Ammoniaksperrkatalysatoreinheit umfassen. Weiter kann die Abgasbehandlungsbaugruppe eine Oxidationskatalysatoreinheit oder/und eine Partikelfiltereinheit umfassen.

Die Erfindung betrifft ferner eine Abgasanlage für eine Brennkraftmaschine, insbesondere Diesel-Brennkraftmaschine, umfassend wenigstens eine erfindungsgemäß aufgebaute Abgasbehandlungsanordnung.

Die vorliegende Erfindung wird nachfolgend mit Bezug auf die beiliegenden Figuren detailliert beschrieben. Es zeigt:
- Fig. 1: eine teilweise offen dargestellte Seitenansicht einer Abgasbehandlungseinheit für eine Brennkraftmaschine;
- Fig. 2: in prinzipartiger und abgewickelter Darstellung die in Strömungsrichtung aufeinander folgenden und einander im Wesentlichen axial überlappenden Systembereiche der Abgasbehandlungsanordnung der Fig. 1;
- Fig. 3: eine Prinzip-Querschnittansicht der Abgasbehandlungsanordnung der Fig. 1, geschnitten längs einer Linie III-III in Fig. 1;
- Fig. 4: eine Teil-Querschnittansicht eines Strömungspfads der Abgasbehandlungsanordnung der Fig. 1 im Bereich einer Kohlenwasserstoff-Einleitbaugruppe.

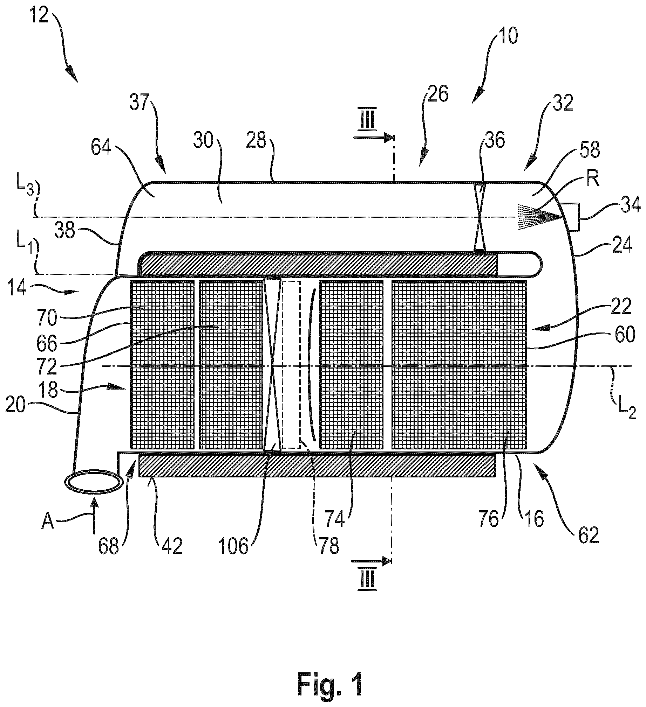

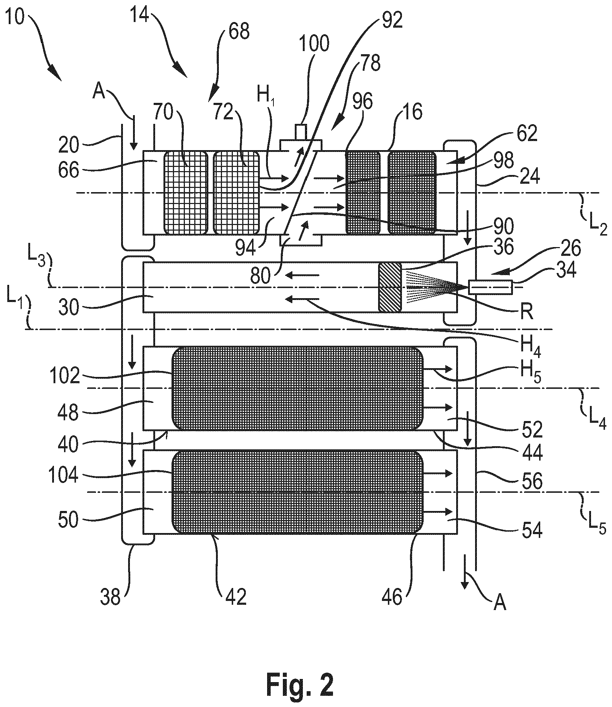

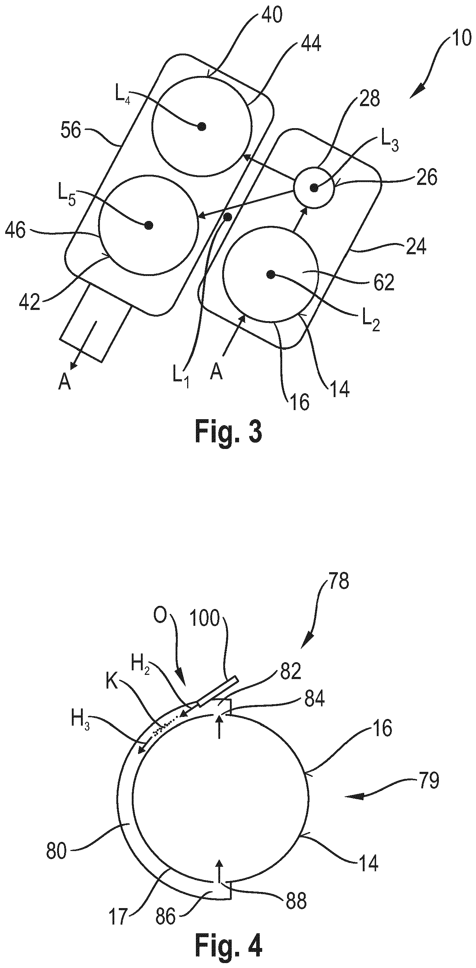

**In** Fig. 1 ist eine Abgasbehandlungsanordnung 10 für eine Abgasanlage 12 insbesondere für eine Diesel-Brennkraftmaschine in Seitenansicht zu erkennen. Eine derartige Abgasbehandlungsanordnung 10 kann beispielsweise in einer Abgasanlage 12 eines Nutzkraftfahrzeugs bzw. eines Lastkraftwagens vorgesehen sein. In den Fig. 2 und 3 ist die Abgasbehandlungsanordnung 10 in prinzipieller Ansicht dargestellt, wobei die Fig. 2 eine Umfangsabwicklung der grundsätzlich in Richtung einer Abgasbehandlungsanordnung-Längsachse L₁ langgestreckten Abgasbehandlungsanordnung 10 dargestellt ist.

Die Abgasbehandlungsanordnung 10 umfasst einen allgemein mit 14 bezeichneten und in Richtung einer Strömungspfad-Längsachse L₂ langgestreckten Strömungspfad mit einem einstückigen oder aus mehreren Teilen zusammengesetzten, im Wesentlichen rohrartigen Strömungspfadgehäuse 16. An einem stromaufwärtigen Endbereich 18 des Strömungspfads 14 schließt ein Einleitgehäuse 20 an das Strömungspfadgehäuse 16 an. Über das Einleitgehäuse 20 wird von einer Brennkraftmaschine ausgestoßenes Abgas A in die Abgasbehandlungsanordnung 10 bzw. den Strömungspfad 14 eingeleitet. In einem stromabwärtigen Endbereich 22 des Strömungspfads 14 schließt ein erstes Umlenkgehäuse 24 an das Strömungspfadgehäuse 16 an. Im ersten Umlenkgehäuse 24 wird das den Strömungspfad 14 durchströmende bzw. aus diesem austretende Abgas A um etwa 180° umgelenkt und in eine Abgas/Reaktionsmittel-Mischstrecke 26 eingeleitet. Die Abgas/Reaktionsmittel-Mischstrecke 26 umfasst in einem rohrartigen Mischstreckengehäuse 28 einen in Richtung einer Mischstrecken-Längsachse L₃ langgestreckten Mischkanal 30. An einem stromaufwärtigen Endbereich 32 der Abgas/Reaktionsmittel-Mischstrecke 26 ist, beispielsweise getragen am ersten Umlenkgehäuse 24, eine allgemein auch als Injektor bezeichnete Reaktionsmittel-Abgabeeinheit 34 vorgesehen, durch welche ein Reaktionsmittel R, beispielsweise eine Harnstoff/Wasser-Lösung, in den Mischkanal 30 eingespritzt wird. Zum Unterstützen der Durchmischung von Abgas A und Reaktionsmittel R kann in dem Mischstreckengehäuse 28 ein beispielsweise eine Mehrzahl von Ablenkschaufeln oder dergleichen umfassender Mischer 36 angeordnet sein.

In einem stromabwärtigen Endbereich 37 der Abgas/Reaktionsmittel-Mischstrecke 26 schließt das Mischstreckengehäuse 28 an ein zweites Umlenkgehäuse 38 an. Im zweiten Umlenkgehäuse 38 findet erneut eine Umlenkung des Abgasstroms um etwa 180° statt. Über das zweite Umlenkgehäuse 38 wird das Abgas im dargestellten Ausgestaltungsbeispiel in zwei zueinander parallel durchströmbare zweite Abgasbehandlungseinheiten 40, 42 eingeleitet. Jede der zweiten Abgasbehandlungseinheiten 40, 42 umfasst ein rohrartiges und in Richtung einer jeweiligen Abgasbehandlungseinheit-Längsachse L₄, L₅ langgestrecktes Abgasbehandlungseinheitgehäuse 44, 46. Ein jeweiliger stromaufwärtiger Endbereich der Abgasbehandlungseinheitgehäuse 44, 46 stellt einen jeweiligen Eintrittsbereich 48, 50 der zweiten Abgasbehandlungseinheiten 40, 42 bereit, und ein jeweiliger stromabwärtiger Endbereich der Abgasbehandlungseinheitgehäuse 44, 46 stellt einen jeweiligen Austrittsbereich 52, 54 der zweiten Abgasbehandlungseinheiten 40, 42 bereit. Diese sind zu einem Ableitgehäuse 56 offen, über welches das in der Abgasbehandlungsanordnung 10 behandelte Abgas A die Abgasbehandlungsanordnung 10 zu weiteren Systembereichen der Abgasanlage 12, beispielsweise einem oder mehreren Schalldämpfer oder dergleichen, verlässt.

Die Fig. 1 und 3 zeigen, dass in der Abgasbehandlungsanordnung 10 der Strömungspfad 14, die Abgas/Reaktionsmittel-Mischstrecke 26 und die zweiten Abgasbehandlungseinheiten 40, 42 derart positioniert sind, dass deren Längsachsen L₂, L₃, L₄, L₅ zueinander und zur Abgasbehandlungsanordnung-Längsachse L₁ im Wesentlichen parallel sind und dass sie sich in axialer Richtung im Wesentlichen vollständig überlappen. Dies bedeutet, dass ein Eintrittsbereich 58 der Abgas/Reaktionsmittel-Mischstrecke 26 im Wesentlichen im gleichen axialen Bereich liegt, wie ein Austrittsbereich 60 einer im Strömungspfad 14 angeordneten Abgasbehandlungsbaugruppe 62, und dass ein Austrittsbereich 64 der Abgas/Reaktionsmittel-Mischstrecke 26 im Wesentlichen im gleichen axialen Bereich liegt wie ein Eintrittsbereich 66 einer im Strömungspfad 14 angeordneten ersten Abgasbehandlungseinheit 68. Gleichermaßen liegt der Austrittsbereich 64 der Abgas/Reaktionsmittel-Mischstrecke 26 im Wesentlichen im gleichen axialen Bereich, wie die Eintrittsbereiche 48, 50 der zweiten Abgasbehandlungseinheiten 40, 42, während der Eintrittsbereich 58 der Abgas/Reaktionsmittel-Mischstrecke 26 im Wesentlichen im gleichen axialen Bereich liegt, wie die Austrittsbereiche 52, 54 der zweiten Abgasbehandlungseinheiten 40, 42.

Die im Strömungspfad 14 bzw. im Strömungspfadgehäuse 16 angeordnete erste Abgasbehandlungseinheit 68 umfasst im dargestellten Ausgestaltungsbeispiel zwei in Strömungsrichtung bzw. axial in Richtung der Strömungspfad-Längsachse L₂ aufeinander folgend eine SCR-Katalysatoreinheit 70 und eine Ammoniaksperrkatalysatoreinheit 72. Das über das Einleitgehäuse 20 in den Strömungspfad 14 eingeleitete Abgas A durchströmt die beiden Katalysatoreinheiten 70, 72 der ersten Abgasbehandlungseinheit 68 im Wesentlichen in einer Abgas-Hauptströmungsrichtung H₁ im Strömungspfad 14, wobei die Abgas-Hauptströmungsrichtung H₁ im Strömungspfad 14 im Wesentlichen parallel zur Strömungspfad-Längsachse L₂ orientiert ist. Selbstverständlich können von dieser Abgas-Hauptströmungsrichtung H₁ abweichende Strömungsrichtungskomponenten vorhanden sein, beispielsweise in Bereichen, in welchen Verwirbelungen oder Turbulenzen auftreten. In der Abgasanlage 12 kann stromaufwärts der Abgasbehandlungsanordnung 10 bzw. der SCR-Katalysatoreinheit 70 eine weitere Reaktionsmittel-Abgabeeinheit angeordnet sein, um stromaufwärts der SCR-Katalysatoreinheit 70 ein Reaktionsmittel, beispielsweise eine Harnstoff/WasserLösung, in den Abgasstrom einzuleiten.

Stromabwärts der beiden Katalysatoreinheiten 70, 72 der ersten Abgasbehandlungseinheit 68 sind in Strömungsrichtung aufeinander folgend ein Oxidationskatalysator 74, insbesondere Diesel-Oxidationskatalysatoreinheit, und eine Partikelfiltereinheit 76 der Abgasbehandlungsbaugruppe 62 angeordnet. Das den Strömungspfad 14 durchströmende Abgas A strömt im Wesentlichen in der Abgas-Hauptströmungsrichtung H₁ zunächst durch die Oxidationskatalysatoreinheit 74 und dann die Partikelfiltereinheit 76, bevor es durch das erste Umlenkgehäuse 24 in Richtung zur Abgas/Reaktionsmittel-Mischstrecke 26 umgelenkt wird.

Es ist darauf hinzuweisen, dass bei der Abgasbehandlungsanordnung 10 sowohl die erste Abgasbehandlungseinheit 68, als auch die Abgasbehandlungsbaugruppe 62 anders aufgebaut sein können, als im dargestellten Ausgestaltungsbeispiel. So könnte beispielsweise die erste Abgasbehandlungseinheit 68 nur die SCR-Katalysatoreinheit 70 umfassen. Die Abgasbehandlungsbaugruppe 62 könnte beispielsweise nur die Oxidationskatalysatoreinheit 74 umfassen.

In Strömungsrichtung bzw. axial im Wesentlichen zwischen der ersten Abgasbehandlungseinheit 68 und der Abgasbehandlungsbaugruppe 22 ist eine in Fig. 1 nur prinzipartig angedeutete Kohlenwasserstoff-Einleitbaugruppe 78 vorgesehen. Die Kohlenwasserstoff-Einleitbaugruppe 78 umfasst einen in den Fig. 2 und 4 erkennbaren Einleit-Ringströmungskanal 80. Der Einleit-Ringströmungskanal 80 ist im Wesentlichen an der Außenseite des insbesondere im Bereich der Kohlenwasserstoff-Einleitbaugruppe 78 eine Umfangswand 17 des Strömungspfads 14 bereitstellenden Strömungspfadgehäuses 16 geführt und erstreckt sich um die Strömungspfad-Längsachse L₂ in einem Winkelbereich von etwa 180°.

Es ist darauf hinzuweisen, dass die Kohlenwasserstoff-Einleitbaugruppe 78 durch ein separates, ringartiges Gehäuse 79 bereitgestellt sein kann, welches axial zwischen der ersten Abgasbehandlungseinheit 68 und der Abgasbehandlungsbaugruppe 62 einen Bereich des Strömungspfadgehäuses 16 bzw. der Umfangswand 17 bereitstellt und den Einleit-Ringströmungskanal 80 sowohl nach radial außen, als auch nach radial innen, als auch in beiden Umfangsrichtungen begrenzt.

Der Einleit-Ringströmungskanal 80 umfasst einen stromaufwärtigen Strömungskanal-Endbereich 82, in welchem der Einleit-Ringströmungskanal 80 über eine beispielsweise im Strömungspfadgehäuse 16 angeordnete Strömungskanal-Eintrittsöffnung 84 offen ist. In einem stromabwärtigen Strömungskanal-Endbereich 86 ist der Einleit-Ringströmungskanal 80 über eine Strömungskanal-Austrittsöffnung 88 offen. Die Strömungskanal-Eintrittsöffnung 84 und die Strömungskanal-Austrittsöffnung 88 liegen einander bezüglich der Strömungspfad-Längsachse L₂ im Wesentlichen diametral gegenüber und liegen, wie die Fig. 2 dies veranschaulicht, im Wesentlichen im gleichen axialen Bereich, sind zueinander im Wesentlichen also nicht in Richtung der Strömungspfad-Längsachse L₂ versetzt.

Im Strömungspfadgehäuse 16 ist eine bezüglich der Strömungspfad-Längsachse L₂ schräggestellte Trennwand 90 angeordnet, welche im Bereich axial zwischen der ersten Abgasbehandlungseinheit 68 und der Abgasbehandlungsbaugruppe 62 den Strömungspfad 14 in einen an einen Austrittsbereich 92 der ersten Abgasbehandlungseinheit 68 anschließenden stromaufwärtigen Strömungspfadabschnitt 94 und einen an einen Eintrittsbereich 96 der Abgasbehandlungsbaugruppe 62 anschließenden stromabwärtigen Strömungspfadabschnitt 98 unterteilt. Das aus der ersten Abgasbehandlungseinheit 68 im Wesentlichen in Richtung der Abgas-Hauptströmungsrichtung H₁ im Strömungspfad 14 austretende Abgas A wird durch die Trennwand 90 umgelenkt und strömt in Richtung zur Strömungskanal-Eintrittsöffnung 84, über welche der Einleit-Ringströmungskanal 80 zum stromaufwärtigen Strömungspfadabschnitt 94 offen ist. Das in den Einleit-Ringströmungskanal 80 eintretende Abgas strömt im Einleit-Ringströmungskanal 80 im Wesentlichen in Umfangsrichtung zur Strömungskanal-Austrittsöffnung 88 und tritt über diese in den stromabwärtigen Strömungspfad 98 ein.

Nahe dem stromaufwärtigen Strömungskanal-Endbereich 82 ist eine Kohlenwasserstoff-Abgabeeinheit 100 vorgesehen. Über die Kohlenwasserstoff-Abgabeeinheit 100 wird flüssiger Kohlenwasserstoff K im Wesentlichen in einer Haupt-Abgaberichtung H₂ abgegeben, welche im Wesentlichen einer Abgas-Hauptströmungsrichtung H₃ im Bereich eines Abgabeorts O entspricht, also in demjenigen Bereich, in welchem die Kohlenwasserstoff-Abgabeeinheit 100 den flüssigen Kohlenwasserstoff K im Wesentlichen in Form eines Sprühnebels oder dergleichen in den Einleit-Ringströmungskanal 80 einspritzt. Beim Strömen entlang des Einleit-Ringströmungskanals 80 kann der Kohlenwasserstoff K sich mit dem im Einleit-Ringströmungskanal 80 strömenden Abgas durchmischen, so dass im Bereich der Strömungskanal-Austrittsöffnung 88 ein Gemisch aus Kohlenwasserstoff und Abgas in den stromabwärtigen Strömungspfadabschnitt 98 eintritt und insbesondere in Richtung zur Oxidationskatalysatoreinheit 76 strömt.

Um die Strömung von Abgas nach radial außen in den Einleit-Ringströmungskanal 80 zu unterstützen, kann stromabwärts der ersten Abgasbehandlungseinheit 68 eine Drallstrom-Erzeugungseinheit 106 angeordnet sein, welche das aus der ersten Abgasbehandlungseinheit 68 austretende Abgas in Umfangsrichtung ablenkt und dieses somit mit einer das Abgas verstärkt nach radial leitenden Umfangsströmungsrichtungskomponente beaufschlagt.

Durch Oxidation des im Abgas A transportierten Kohlenwasserstoffs K in der Oxidationskatalysatoreinheit 76 wird Wärme freigesetzt, welche einerseits zu einer Erwärmung der Oxidationskatalysatoreinheit 76 beiträgt und somit dafür sorgt, dass diese schnell auf eine für die katalytische Reaktion erforderliche Betriebstemperatur gebracht wird bzw. effizient bei dieser Temperatur gehalten wird. Andererseits kann ein Teil dieser Wärme durch das die Oxidationskatalysatoreinheit 76 durchströmende Abgas in Richtung zu den nachfolgenden Systembereichen, insbesondere der Abgas/Reaktionsmittel-Mischstrecke 26 und den zweiten Abgasbehandlungseinheiten 40, 42, getragen werden. In der Abgas/Reaktionsmittel-Mischstrecke 26 kann dies zu einer verstärkten Verdampfung des in flüssiger Form eingespritzten Reaktionsmittels R beitragen. In den zweiten Abgasbehandlungseinheiten 40, 42 können jeweilige SCR-Katalysatoreinheiten 102,104 derselben effizient erwärmt werden und schneller auf die für die SCR-Reaktion erforderliche Temperatur gebracht werden bzw. auf dieser Temperatur gehalten werden.

Mit dem erfindungsgemäßen Aufbau einer Abgasbehandlungsanordnung wird einerseits durch die Beimengung von Kohlenwasserstoff in den Abgasstrom und andererseits durch eine effiziente Durchmischung des Kohlenwasserstoffs mit dem in der Abgasbehandlungsanordnung strömenden Abgas dafür gesorgt, dass durch Oxidation des Kohlenwasserstoffs über eine große Fläche verteilt im Wesentlichen gleichförmig Wärme freigesetzt werden kann, welche zur Erwärmung verschiedener zur Durchführung katalytischer Reaktionen vorgesehener Systembereiche der Abgasbehandlungsanordnung 10 nutzbar ist. Durch die Integration der Kohlenwasserstoff-Einleitbaugruppe in den Strömungspfad in der vorangehend beschriebenen Art und Weise wird eine kompakte Ausgestaltung der Abgasbehandlungsanordnung erreicht bzw. beibehalten, bei welcher das Strömungsprinzip gewährleistet ist, das die Abgas-Hauptströmungsrichtung H₁ in dem auch die Kohlenwasserstoff-Einleitbaugruppe umfassenden Strömungspfad im Wesentlichen entgegengesetzt gerichtet ist zu einer Abgas-Hauptströmungsrichtung H₄ in der Abgas/Reaktionsmittel-Mischstrecke, während eine Abgas-Hauptströmungsrichtung Hs in den zweiten Abgasbehandlungseinheiten zur Abgas-Hauptströmungsrichtung H₁ im Strömungspfad gleichgerichtet, zur Abgas-Hauptströmungsrichtung H₄ in der Abgas/Reaktionsmittel-Mischstrecke jedoch entgegengesetzt gerichtet ist. Damit kann gewährleistet werden, dass bei axial sehr kompakter Bauart aufgrund der Einleitung von Kohlenwasserstoff und aufgrund der effizienten Durchmischung des Kohlenwasserstoffs mit dem Abgas die gesetzlichen Grenzwerte für Schadstoffanteile im Abgas unter verschiedensten Betriebsumständen einer Brennkraftmaschine bzw. der Abgasanlage erreicht bzw. beibehalten werden können.

## Patentansprüche

1. Abgasbehandlungsanordnung für eine Abgasanlage einer Brennkraftmaschine, insbesondere Diesel-Brennkraftmaschine, umfassend wenigstens eine erste Abgasbehandlungseinheit (68) und stromabwärts der wenigstens einen ersten Abgasbehandlungseinheit (68), eine Abgasbehandlungsbaugruppe (62), wobei die wenigstens eine erste Abgasbehandlungseinheit (68) und die Abgasbehandlungsbaugruppe (62) in Richtung einer Strömungspfad-Längsachse (L₂) eines die wenigstens eine erste Abgasbehandlungseinheit (68) und die Abgasbehandlungsbaugruppe (62) umfassenden Strömungspfads (14) axial aufeinander folgend angeordnet sind, wobei in dem Strömungspfad (14) im Wesentlichen axial zwischen der wenigstens einen ersten Abgasbehandlungseinheit (68) und der Abgasbehandlungsbaugruppe (62) eine Kohlenwasserstoff-Einleitbaugruppe (78) zum Einleiten von Kohlenwasserstoff (K) in in dem Strömungspfad (14) strömendes Abgas (A) angeordnet ist, **dadurch gekennzeichnet, dass** die Kohlenwasserstoff-Einleitbaugruppe (78) einen die Strömungspfad-Längsachse (L₂) ringartig umgebenden Einleit-Ringströmungskanal (80) umfasst, wobei der Einleit-Ringströmungskanal (80) in einem stromaufwärtigen Strömungskanal-Endbereich (82) zu einem Austrittsbereich (92) der wenigstens einen ersten Abgasbehandlungseinheit (68) offen ist und in einem stromabwärtigen Strömungskanal-Endbereich (86) zu einem Eintrittsbereich (96) der Abgasbehandlungsbaugruppe (62) offen ist, wobei die Kohlenwasserstoff-Einleitbaugruppe (78) eine Kohlenwasserstoff-Abgabeeinheit (100) zum Abgeben von Kohlenwasserstoff (K) in den Einleit-Ringströmungskanal (80) umfasst.

2. Abgasbehandlungsanordnung nach Anspruch 1, **dadurch gekennzeichnet, dass** der Einleit-Ringströmungskanal (80) in seinem stromaufwärtigen Strömungskanal-Endbereich (82) eine Strömungskanal-Eintrittsöffnung (84) und in seinem stromabwärtigen Strömungskanal-Endbereich (86) eine Strömungskanal-Austrittsöffnung (88) umfasst, und dass die Strömungskanal-Austrittsöffnung (88) der Strömungskanal-Eintrittsöffnung (84) bezüglich der Strömungspfad-Längsachse (L₂) im Wesentlichen diametral gegenüberliegt oder/und die Strömungskanal-Austrittsöffnung (88) und die Strömungskanal-Eintrittsöffnung (84) in Richtung der Strömungspfad-Längsachse (L₂) im Wesentlichen nicht zueinander versetzt sind.

3. Abgasbehandlungsanordnung nach Anspruch 1 oder 2, **dadurch gekennzeichnet, dass** wenigstens in einem Bereich axial zwischen der wenigstens einen ersten Abgasbehandlungseinheit (68) und der Abgasbehandlungsbaugruppe (62) der Strömungspfad (14) von einer im Wesentlichen in Richtung der Strömungspfad-Längsachse (L₂) sich erstreckenden Umfangswand (17) umgrenzt ist, und dass der Einleit-Ringströmungskanal (80) zwischen dem stromaufwärtigen Strömungskanal-Endbereich (82) und dem stromabwärtigen Strömungskanal-Endbereich (86) an einer Außenseite der Umfangswand (17) verläuft.

4. Abgasbehandlungsanordnung nach Anspruch 3, **dadurch gekennzeichnet, dass** in dem von der Umfangswand (17) umgrenzten Strömungspfad (14) axial zwischen der wenigstens einen ersten Abgasbehandlungseinheit (68) und der Abgasbehandlungsbaugruppe (62) eine den Strömungspfad (14) in einen an den Austrittsbereich (92) der wenigstens einen ersten Abgasbehandlungseinheit (68) anschließenden stromaufwärtigen Strömungspfadabschnitt (94) und einen an den Eintrittsbereich (96) der Abgasbehandlungsbaugruppe (62) anschließenden stromabwärtigen Strömungspfadabschnitt (98) trennende Trennwand (90) angeordnet ist, und dass der stromaufwärtige Strömungskanal-Endbereich (82) zu dem stromaufwärtigen Strömungspfadabschnitt (94) offen ist und der stromabwärtige Strömungskanal-Endbereich (86) zu dem stromabwärtigen Strömungspfadabschnitt (98) offen ist.

5. Abgasbehandlungsanordnung nach Anspruch 2 und Anspruch 4, **dadurch gekennzeichnet, dass** die Strömungskanal-Eintrittsöffnung (84) in der Umfangswand (17) stromaufwärts der Trennwand (90) angeordnet ist und die Strömungskanal-Austrittsöffnung (88) in der Umfangswand (17) stromabwärts der Trennwand (90) angeordnet ist.

6. Abgasbehandlungsanordnung nach einem der Ansprüche 1-5, **dadurch gekennzeichnet, dass** die Kohlenwasserstoff-Abgabeeinheit (100) Kohlenwasserstoff (K) an einem Kohlenwasserstoff-Abgabeort (O) in den Einleit-Ringströmungskanal (80) abgibt, und dass der Kohlenwasserstoff-Abgabeort (O) näher an dem stromaufwärtigen Strömungskanal-Endbereich (82) als an dem stromabwärtigen Strömungskanal-Endbereich (86) angeordnet ist.

7. Abgasbehandlungsanordnung nach einem der Ansprüche 1-6, **dadurch gekennzeichnet, dass** die Kohlenwasserstoff-Abgabeeinheit (100) zum Abgeben von Kohlenwasserstoff (K) mit einer zum Einleit-Ringströmungskanal (80) im Wesentlichen tangential orientierten Haupt-Abgaberichtung (H₂) angeordnet ist, oder/und dass die Kohlenwasserstoff-Abgabeeinheit (100) zum Abgeben von Kohlenwasserstoff (K) mit einer im Wesentlichen einer Abgas-Hauptströmungsrichtung (H₃) im Einleit-Ringströmungskanal (80) entsprechenden Haupt-Abgaberichtung (H₂) angeordnet ist.

8. Abgasbehandlungsanordnung nach einem der Ansprüche 1-7, **dadurch gekennzeichnet, dass** stromabwärts der Abgasbehandlungsbaugruppe (62) wenigstens eine zweite Abgasbehandlungseinheit (40, 42) angeordnet ist.

9. Abgasbehandlungsanordnung nach Anspruch 8, **dadurch gekennzeichnet, dass** stromabwärts der Abgasbehandlungsbaugruppe (62) und stromaufwärts der wenigstens einen zweiten Abgasbehandlungseinheit (40, 42) eine Abgas/Reaktionsmittel-Mischstrecke (26) mit einem im Wesentlichen in Richtung einer Mischstrecken-Längsachse (L₃) langgestreckten Mischkanal (30) und einer Reaktionsmittel-Abgabeeinheit (34) zum Abgeben von Reaktionsmittel (R) in den Mischkanal (30) vorgesehen ist.

10. Abgasbehandlungsanordnung nach Anspruch 9, **dadurch gekennzeichnet, dass** die Mischstrecken-Längsachse (L₃) im Wesentlichen parallel zur Strömungspfad-Längsachse (L₂) ist, oder/und dass der Strömungspfad (14) und die Abgas/Reaktionsmittel-Mischstrecke (26) einander in axialer Richtung im Wesentlichen vollständig überlappen, so dass ein Eintrittsbereich (58) der Abgas/Reaktionsmittel-Mischstrecke (26) in Richtung der Mischstrecken-Längsachse (L₃) im Wesentlichen im gleichen axialen Bereich positioniert ist, wie ein Austrittsbereich (60) der Abgasbehandlungsbaugruppe (62), und ein Austrittsbereich (64) der Abgas/Reaktionsmittel-Mischstrecke (26) in Richtung der Mischstrecken-Längsachse (L₃) im Wesentlichen im gleichen axialen Bereich positioniert ist, wie ein Eintrittsbereich (66) der wenigstens einen ersten Abgasbehandlungseinheit (68).

11. Abgasbehandlungsanordnung nach Anspruch 9 oder 10, **dadurch gekennzeichnet, dass** eine Abgas-Hauptströmungsrichtung (H₄) im Mischkanal (30) im Wesentlichen entgegengesetzt gerichtet ist zu einer Abgas-Hauptströmungsrichtung (H₁) im Strömungspfad (14).

12. Abgasbehandlungsanordnung nach einem der Ansprüche 8-11, **dadurch gekennzeichnet, dass** die wenigstens eine zweite Abgasbehandlungseinheit (40, 42) in Richtung einer zur Strömungspfad-Längsachse (L₂) im Wesentlichen parallelen Abgasbehandlungseinheit-Längsachse (L₄, L₅) langgestreckt ist und im Wesentlichen in Richtung der Abgasbehandlungseinheit-Längsachse (L₄, L₅) durchströmbar ist, und dass die wenigstens eine zweite Abgasbehandlungseinheit (40, 42) und die Abgas/Reaktionsmittel-Mischstrecke (26) einander in axialer Richtung im Wesentlichen vollständig überlappen, so dass der Eintrittsbereich (58) der Abgas/Reaktionsmittel-Mischstrecke (26) in Richtung der Mischstrecken-Längsachse (L₃) im Wesentlichen im gleichen axialen Bereich positioniert ist, wie ein Austrittsbereich (52, 54) der wenigstens einen zweiten Abgasbehandlungseinheit (40, 42), und der Austrittsbereich (64) der Abgas/Reaktionsmittel-Mischstrecke (26) in Richtung der Mischstrecken-Längsachse (L) im Wesentlichen im gleichen axialen Bereich positioniert ist, wie ein Eintrittsbereich (48, 50) der wenigstens einen zweiten Abgasbehandlungseinheit (40, 42).

13. Abgasbehandlungsanordnung nach Anspruch 12, **dadurch gekennzeichnet, dass** der Eintrittsbereich (58) der Abgas/Reaktionsmittel-Mischstrecke (26) über ein erstes Strömungsumlenkgehäuse (24) mit dem Austrittsbereich (60) der Abgasbehandlungsbaugruppe (62) verbunden ist und der Austrittsbereich (64) der Abgas/Reaktionsmittel-Mischstrecke (26) über ein zweites Strömungsumlenkgehäuse (38) mit dem Eintrittsbereich (48, 50) der wenigstens einen zweiten Abgasbehandlungseinheit (40, 42) verbunden ist.

14. Abgasbehandlungsanordnung nach Anspruch 12 oder 13, **dadurch gekennzeichnet, dass** wenigstens zwei zueinander parallel durchströmbare zweite Abgasbehandlungseinheiten (40, 42) quer zur Abgasbehandlungseinheit-Längsachse (L₄, L₅) nebeneinander und einander in Richtung der Abgasbehandlungseinheit-Längsachse (L₄, L₅) im Wesentlichen vollständig überlappend vorgesehen sind.

15. Abgasbehandlungsanordnung nach einem der Ansprüche 1-14, **dadurch gekennzeichnet, dass** wenigstens eine Abgasbehandlungseinheit (68, 40, 42) wenigstens eine SCR-Katalysatoreinheit (70, 102, 104) oder/und wenigstens eine Ammoniaksperrkatalysatoreinheit (72) umfasst, oder/und dass die Abgasbehandlungsbaugruppe (62) eine Oxidationskatalysatoreinheit (74) oder/und eine Partikelfiltereinheit (76) umfasst.

16. Abgasanlage für eine Brennkraftmaschine, insbesondere Diesel-Brennkraftmaschine, umfassend wenigstens eine Abgasbehandlungsanordnung (10) nach einem der Ansprüche 1-15.

## Claims

1. An exhaust-gas treatment arrangement for an exhaust gas system of an internal combustion engine, in particular diesel internal combustion engine, comprising at least one first exhaust-gas treatment unit (68) and, downstream of the at least one first exhaust-gas treatment unit (68), an exhaust-gas treatment assembly (62), the at least one first exhaust-gas treatment unit (68) and the exhaust-gas treatment assembly (62) being arranged axially one after the other in the direction of a flow-path longitudinal axis (L₂) of a flow path (14) comprising the at least one first exhaust-gas treatment unit (68) and the exhaust-gas treatment assembly (62), a hydrocarbon introduction assembly (78) for introducing hydrocarbon (K) into exhaust gas (A) flowing in the flow path (14) being arranged in the flow path (14) substantially axially between the at least one first exhaust-gas treatment unit (68) and the exhaust-gas treatment assembly (62), **characterized in that** the hydrocarbon introduction assembly (78) comprises an introduction ring flow channel (80) which annularly surrounds the flow-path longitudinal axis (L₂), the introduction ring flow channel (80) being open in an upstream flow-channel end region (82) toward an outlet region (92) of the at least one first exhaust-gas treatment unit (68) and being open in a downstream flow-channel end region (86) toward an inlet region (96) of the exhaust-gas treatment assembly (62), and the hydrocarbon introduction assembly (78) comprising a hydrocarbon discharging unit (100) for discharging hydrocarbon (K) into the introduction ring flow channel (80).

2. The exhaust-gas treatment arrangement as claimed in claim 1, **characterized in that** the introduction ring flow channel (80) comprises a flow-channel inlet opening (84) in its upstream flow-channel end region (82) and a flow-channel outlet opening (88) in its downstream flow-channel end region (86), and **in that** the flow-channel outlet opening (88) is situated substantially diametrically opposite the flow-channel inlet opening (84) with respect to the flow-path longitudinal axis (L₂) or/and the flow-channel outlet opening (88) and the flow-channel inlet opening (84) are substantially not offset in relation to each other in the direction of the flow-path longitudinal axis (L₂).

3. The exhaust-gas treatment arrangement as claimed in claim 1 or 2, **characterized in that**, at least in a region axially between the at least one first exhaust-gas treatment unit (68) and the exhaust-gas treatment assembly (62), the flow path (14) is bounded by a circumferential wall (17) extending substantially in the direction of the flow-path longitudinal axis (L₂), and **in that** the introduction ring flow channel (80) extends between the upstream flow-channel end region (82) and the downstream flow-channel end region (86) on an outer side of the circumferential wall (17).

4. The exhaust-gas treatment arrangement as claimed in claim 3, **characterized in that** a partition wall (90), which separates the flow path (14) in an upstream flow-path portion (94) adjoining the outlet region (92) of the at least one first exhaust-gas treatment unit (68) from a downstream flow path portion (98) adjoining the inlet region (96) of the exhaust-gas treatment assembly (62), is arranged axially between the at least one first exhaust-gas treatment unit (68) and the exhaust-gas treatment assembly (62) in the flow path (14) bounded by the circumferential wall (17), and **in that** the upstream flow-channel end region (82) is open toward the upstream flow-path portion (94) and the downstream flow-channel end region (86) is open toward the downstream flow-path portion (98).

5. The exhaust-gas treatment arrangement as claimed in claim 2 and claim 4, **characterized in that** the flow-channel inlet opening (84) is arranged in the circumferential wall (17) upstream of the partition wall (90) and the flow-channel outlet opening (88) is arranged in the circumferential wall (17) downstream of the partition wall (90).

6. The exhaust-gas treatment arrangement as claimed in one of claims 1-5, **characterized in that** the hydrocarbon discharging unit (100) discharges hydrocarbon (K) into the introduction ring flow channel (80) at a hydrocarbon discharging site (0), and **in that** the hydrocarbon discharging site (O) is arranged closer to the upstream flow-channel end region (82) than to the downstream flow-channel end region (86).

7. The exhaust-gas treatment arrangement as claimed in one of claims 1-6, **characterized in that** the hydrocarbon discharging unit (100) is arranged with a main discharging direction (H₂) oriented substantially tangentially in relation to the introduction ring flow channel (80) to discharge hydrocarbon (K), or/and **in that** the hydrocarbon discharging unit (100) is arranged with a main discharging direction (H₂) corresponding substantially to an exhaust-gas main flow direction (H₃) in the introduction ring flow channel (80) to discharge hydrocarbon (K).

8. The exhaust-gas treatment arrangement as claimed in one of claims 1-7, **characterized in that** at least one second exhaust-gas treatment unit (40, 42) is arranged downstream of the exhaust-gas treatment assembly (62).

9. The exhaust-gas treatment arrangement as claimed in claim 8, **characterized in that** an exhaust-gas/reactant mixing section (26) having a mixing channel (30), which is elongate substantially in the direction of a mixing-section longitudinal axis (L₃), and a reactant discharging unit (34) for discharging reactant (R) into the mixing channel (30) is provided downstream of the exhaust-gas treatment assembly (62) and upstream of the at least one second exhaust-gas treatment unit (40, 42).

10. The exhaust-gas treatment arrangement as claimed in claim 9, **characterized in that** the mixing-section longitudinal axis (L₃) is substantially parallel to the flow-path longitudinal axis (L₂), or/and **in that** the flow path (14) and the exhaust-gas/reactant mixing section (26) overlap one another substantially completely in the axial direction, with the result that an inlet region (58) of the exhaust-gas/reactant mixing section (26) is positioned substantially in the same axial region in the direction of the mixing-section longitudinal axis (L₃) as an outlet region (60) of the exhaust-gas treatment assembly (62), and an outlet region (64) of the exhaust-gas/reactant mixing section (26) is positioned substantially in the same axial region in the direction of the mixing-section longitudinal axis (L₃) as an inlet region (66) of the at least one first exhaust-gas treatment unit (68).

11. The exhaust-gas treatment arrangement as claimed in claim 9 or 10, **characterized in that** an exhaust-gas main flow direction (H₄) in the mixing channel (30) is aligned substantially in the opposite direction to an exhaust-gas main flow direction (H₁) in the flow path (14).

12. The exhaust-gas treatment arrangement as claimed in one of claims 8-11, **characterized in that** the at least one second exhaust-gas treatment unit (40, 42) is elongate in the direction of an exhaust-gas-treatment-unit longitudinal axis (L₄, L₅) substantially parallel to the flow-path longitudinal axis (L₂) and can be flowed through substantially in the direction of the exhaust-gas-treatment-unit longitudinal axis (L₄, L₅), or/and **in that** the at least one second exhaust-gas treatment unit (40, 42) and the exhaust-gas/reactant mixing section (26) overlap one another substantially completely in the axial direction, with the result that the inlet region (58) of the exhaust-gas/reactant mixing section (26) is positioned substantially in the same axial region in the direction of the mixing-section longitudinal axis (L₃) as an outlet region (52, 54) of the at least one second exhaust-gas treatment unit (40, 42), and the outlet region (64) of the exhaust-gas/reactant mixing section (26) is positioned substantially in the same axial region in the direction of the mixing-section longitudinal axis (L) as an inlet region (48, 50) of the at least one second exhaust-gas treatment unit (40, 42).

13. The exhaust-gas treatment arrangement as claimed in claim 12, **characterized in that** the inlet region (58) of the exhaust-gas/reactant mixing section (26) is connected to the outlet region (60) of the exhaust-gas treatment assembly (62) via a first flow deflection housing (24) and the outlet region (64) of the exhaust-gas/reactant mixing section (26) is connected to the inlet region (48, 50) of the at least one second exhaust-gas treatment unit (40, 42) via a second flow deflection housing (38).

14. The exhaust-gas treatment arrangement as claimed in claim 12 or 13, **characterized in that** at least two second exhaust-gas treatment units (40, 42), which can be flowed through in parallel, are provided next to one another transversely in relation to the exhaust-gas-treatment-unit longitudinal axis (L₄, L₅) and so as to substantially completely overlap one another in the direction of the exhaust-gas-treatment-unit longitudinal axis (L₄, L₅).

15. The exhaust-gas treatment arrangement as claimed in one of claims 1-14, **characterized in that** at least one exhaust-gas treatment unit (68, 40, 42) comprises at least one SCR catalytic converter unit (70, 102, 104) or/and at least one ammonia slip catalytic converter unit (72), or/and **in that** the exhaust-gas treatment assembly (62) comprises an oxidation catalytic converter unit (74) or/and a particle filter unit (76).

16. An exhaust gas system for an internal combustion engine, in particular diesel internal combustion engine, comprising at least one exhaust-gas treatment arrangement (10) as claimed in one of claims 1-15.

## Revendications

1. Un dispositif de traitement des gaz d'échappement pour un système d'échappement d'un moteur à combustion interne, en particulier d'un moteur à combustion interne diesel, comprenant au moins une première unité de traitement des gaz d'échappement (68) et, en aval de ladite au moins une première unité de traitement des gaz d'échappement (68), un ensemble de traitement des gaz d'échappement (62), ladite au moins une première unité de traitement des gaz d'échappement (68) et l'ensemble de traitement des gaz d'échappement (62) étant disposés axialement l'un après l'autre dans la direction d'un axe longitudinal du trajet d'écoulement (L₂) d'un trajet d'écoulement (14) comprenant ladite au moins une première unité de traitement des gaz d'échappement (68) et l'ensemble de traitement des gaz d'échappement (62), un ensemble d'introduction d'hydrocarbures (78) pour introduire de l'hydrocarbure (K) dans les gaz d'échappement (A) s'écoulant dans le trajet d'écoulement (14) étant agencé dans le trajet d'écoulement (14) sensiblement axialement entre ladite au moins une première unité de traitement des gaz d'échappement (68) et l'ensemble de traitement des gaz d'échappement (62), **caractérisé en ce que** l'ensemble d'introduction d'hydrocarbures (78) comprends un canal d'écoulement annulaire d'introduction (80) qui entoure de manière annulaire l'axe longitudinal du trajet d'écoulement (L₂), le canal d'écoulement annulaire d'introduction (80) étant ouvert dans une région d'extrémité de canal d'écoulement amont (82) vers une région de sortie (92) de ladite au moins une première unité de traitement des gaz d'échappement (68) et étant ouvert dans une région d'extrémité de canal d'écoulement aval (86) vers une région d'entrée (96) de l'ensemble de traitement des gaz d'échappement (62), et l'ensemble d'introduction d'hydrocarbures (78) comprenant une unité d'évacuation d'hydrocarbures (100) pour évacuer les hydrocarbures (K) dans le canal d'écoulement annulaire d'introduction (80).

2. Le dispositif de traitement des gaz d'échappement selon la revendication 1, **caractérisé en ce que** le canal d'écoulement annulaire d'introduction (80) comprend une ouverture d'entrée de canal d'écoulement (84) dans sa région d'extrémité de canal d'écoulement amont (82) et une ouverture de sortie de canal d'écoulement (88) dans sa région d'extrémité de canal d'écoulement aval (86), et **en ce que** l'ouverture de sortie de canal d'écoulement (88) est située sensiblement diamétralement à l'opposé de l'ouverture d'entrée de canal d'écoulement (84) par rapport à l'axe longitudinal du trajet d'écoulement (L₂) ou/et l'ouverture de sortie de canal d'écoulement (88) et l'ouverture d'entrée de canal d'écoulement (84) ne sont sensiblement pas décalées l'une par rapport à l'autre dans la direction de l'axe longitudinal du trajet d'écoulement (L₂).

3. Le dispositif de traitement des gaz d'échappement selon la revendication 1 ou 2, **caractérisé en ce que**, au moins dans une région située axialement entre ladite au moins une première unité de traitement des gaz d'échappement (68) et l'ensemble de traitement des gaz d'échappement (62), le trajet d'écoulement (14) est délimité par une paroi circonférentielle (17) s'étendant sensiblement dans la direction de l'axe longitudinal du trajet d'écoulement (L₂), et **en ce que** le canal d'écoulement annulaire d'introduction (80) s'étend entre la région d'extrémité de canal d'écoulement amont (82) et la région d'extrémité de canal d'écoulement aval (86) sur un côté extérieur de la paroi circonférentielle (17).

4. Le dispositif de traitement des gaz d'échappement selon la revendication 3, **caractérisé en ce qu'**une paroi de séparation (90), qui sépare le trajet d'écoulement (14) dans une partie de trajet d'écoulement amont (94) adjacente à la région de sortie (92) de ladite au moins une première unité de traitement des gaz d'échappement (68) d'une partie de trajet d'écoulement aval (98) adjacente à la région d'entrée (96) de l'ensemble de traitement des gaz d'échappement (62), est disposée axialement entre ladite au moins une première unité de traitement des gaz d'échappement (68) et l'ensemble de traitement des gaz d'échappement (62) dans le trajet d'écoulement (14) délimité par la paroi circonférentielle (17), et **en ce que** la région d'extrémité de canal d'écoulement amont (82) est ouverte vers la partie de trajet d'écoulement amont (94) et la région d'extrémité de canal d'écoulement aval (86) est ouverte vers la partie de trajet d'écoulement aval (98).

5. Le dispositif de traitement des gaz d'échappement selon la revendication 2 et la revendication 4, **caractérisé en ce que** l'ouverture d'entrée de canal d'écoulement (84) est disposée dans la paroi circonférentielle (17) en amont de la paroi de séparation (90) et l'ouverture de sortie de canal d'écoulement (88) est disposée dans la paroi circonférentielle (17) en aval de la paroi de séparation (90).

6. Le dispositif de traitement des gaz d'échappement selon l'une des revendications 1 à 5, **caractérisé en ce que** l'unité d'évacuation d'hydrocarbures (100) évacue les hydrocarbures (K) dans le canal d'écoulement annulaire d'introduction (80) au niveau d'un site d'évacuation des hydrocarbures (O), et **en ce que** le site d'évacuation des hydrocarbures (O) est disposé plus près de la région d'extrémité de canal d'écoulement amont (82) que de la région d'extrémité de canal d'écoulement aval (86).

7. Le dispositif de traitement des gaz d'échappement selon l'une des revendications 1 à 6, **caractérisé en ce que** l'unité d'évacuation d'hydrocarbures (100) est disposée avec une direction d'évacuation principale (H₂) orientée sensiblement tangentiellement par rapport au canal d'écoulement annulaire d'introduction (80) pour évacuer les hydrocarbures (K), ou/et **en ce que** l'unité d'évacuation d'hydrocarbures (100) est agencée avec une direction d'évacuation principale (H₂) correspondant sensiblement à une direction d'écoulement principale des gaz d'échappement (H₃) dans le canal d'écoulement annulaire d'introduction (80) pour évacuer les hydrocarbures (K).

8. Le dispositif de traitement des gaz d'échappement selon l'une des revendications 1 à 7, **caractérisé en ce qu'**au moins une deuxième unité de traitement des gaz d'échappement (40, 42) est disposée en aval de l'ensemble de traitement des gaz d'échappement (62).

9. Le dispositif de traitement des gaz d'échappement selon la revendication 8, **caractérisé en ce qu'**une section de mélange des gaz d'échappement/du réactif (26) comportant un canal de mélange (30), qui est allongé sensiblement dans la direction d'un axe longitudinal de la section de mélange (L₃), et une unité d'évacuation de réactif (34) pour évacuer le réactif (R) dans le canal de mélange (30) est prévue en aval de l'ensemble de traitement des gaz d'échappement (62) et en amont de ladite au moins une deuxième unité de traitement des gaz d'échappement (40, 42).

10. Le dispositif de traitement des gaz d'échappement selon la revendication 9, **caractérisé en ce que** l'axe longitudinal de la section de mélange (L₃) est sensiblement parallèle à l'axe longitudinal du trajet d'écoulement (L₂), et/ou **en ce que** le trajet d'écoulement (14) et la section de mélange des gaz d'échappement/du réactif (26) se chevauchent sensiblement complètement dans la direction axiale, de sorte qu'une région d'entrée (58) de la section de mélange des gaz d'échappement/du réactif (26) est positionnée sensiblement dans la même région axiale dans la direction de l'axe longitudinal de la section de mélange (L₃) qu'une région de sortie (60) de l'ensemble de traitement des gaz d'échappement (62), et une région de sortie (64) de la section de mélange des gaz d'échappement/du réactif (26) est positionnée sensiblement dans la même région axiale dans la direction de l'axe longitudinal de la section de mélange (L₃) qu'une région d'entrée (66) de ladite au moins une première unité de traitement des gaz d'échappement (68).

11. Le dispositif de traitement des gaz d'échappement selon la revendication 9 ou 10, **caractérisé en ce qu'**une direction d'écoulement principale des gaz d'échappement (H₄) dans le canal de mélange (30) est orientée sensiblement dans la direction opposée à une direction d'écoulement principale des gaz d'échappement (H₁) dans le trajet d'écoulement (14).

12. Le dispositif de traitement des gaz d'échappement selon l'une des revendications 8 à 11, **caractérisé en ce que** ladite au moins une deuxième unité de traitement des gaz d'échappement (40, 42) est allongée dans la direction d'un axe longitudinal de l'unité de traitement des gaz d'échappement (L₄, L₅) sensiblement parallèle à l'axe longitudinal du trajet d'écoulement (L₂) et peut être traversée par l'écoulement sensiblement dans la direction de l'axe longitudinal de l'unité de traitement des gaz d'échappement (L₄, L₅), ou/et **en ce que** ladite au moins une deuxième unité de traitement des gaz d'échappement (40, 42) et la section de mélange des gaz d'échappement/du réactif (26) se chevauchent sensiblement complètement dans la direction axiale, de sorte que la zone d'entrée (58) de la section de mélange des gaz d'échappement/du réactif (26) est positionnée sensiblement dans la même zone axiale dans la direction de l'axe longitudinal de la section de mélange (L₃) qu'une zone de sortie (52, 54) de ladite au moins une deuxième unité de traitement des gaz d'échappement (40, 42), et la zone de sortie (64) de la section de mélange des gaz d'échappement/du réactif (26) est positionnée sensiblement dans la même région axiale dans la direction de l'axe longitudinal de la section de mélange (L) qu'une zone d'entrée (48, 50) de ladite au moins une deuxième unité de traitement des gaz d'échappement (40, 42).

13. Le dispositif de traitement des gaz d'échappement selon la revendication 12, **caractérisé en ce que** la zone d'entrée (58) de la section de mélange des gaz d'échappement/du réactif (26) est reliée à la zone de sortie (60) de l'ensemble de traitement des gaz d'échappement (62) par l'intermédiaire d'un premier boîtier de déviation d'écoulement (24) et la zone de sortie (64) de la section de mélange des gaz d'échappement/du réactif (26) est reliée à la zone d'entrée (48, 50) de ladite au moins une deuxième unité de traitement des gaz d'échappement (40, 42) par l'intermédiaire d'un deuxième boîtier de déviation d'écoulement (38).

14. Le dispositif de traitement des gaz d'échappement selon la revendication 12 ou 13, **caractérisé en ce qu'**au moins deux deuxièmes unités de traitement des gaz d'échappement (40, 42), qui peuvent être traversées en parallèle, sont disposées l'une à côté de l'autre transversalement par rapport à l'axe longitudinal (L₄, L₅) de l'unité de traitement des gaz d'échappement et de manière à se chevaucher sensiblement complètement dans la direction de l'axe longitudinal (L₄, L₅) de l'unité de traitement des gaz d'échappement.

15. Un système de traitement des gaz d'échappement selon l'une des revendications 1 à 14, **caractérisé en ce qu'**au moins une unité de traitement des gaz d'échappement (68, 40, 42) comprend au moins une unité de convertisseur catalytique SCR (70, 102, 104) et/ou au moins une unité de convertisseur catalytique à glissement d'ammoniac (72), ou/et **en ce que** l'ensemble de traitement des gaz d'échappement (62) comprend un catalyseur d'oxydation (74) ou/et un filtre à particules (76).

16. Le système de gaz d'échappement pour un moteur à combustion interne, en particulier un moteur à combustion interne diesel, comprenant au moins un dispositif de traitement des gaz d'échappement (10) selon l'une des revendications 1 à 15.
